**Europäisches Patentamt**

**European Patent Office**

**Office européen des brevets**

(19)

(11) Veröffentlichungsnummer : **0 228 617**
**B1**

(12) **EUROPÄISCHE PATENTSCHRIFT**

(45) Veröffentlichungstag der Patentschrift :
**15.03.89**

(21) Anmeldenummer : **86117120.5**

(22) Anmeldetag : **09.12.86**

(51) Int. Cl.⁴ : **B 60 K 17/22**, B 60 K 17/30,
B 60 B 35/10, B 60 K 17/04,
F 16 D 43/21

(54) **Antriebsvorrichtung für wahlweise antreibbare Räder einer Tragachse eines Kraftfahrzeuges.**

(30) Priorität : **12.12.85 DE 3543871**

(43) Veröffentlichungstag der Anmeldung :
**15.07.87 Patentblatt 87/29**

(45) Bekanntmachung des Hinweises auf die Patenterteilung : **15.03.89 Patentblatt 89/11**

(84) Benannte Vertragsstaaten :
**AT BE CH DE ES FR GB IT LI SE**

(56) Entgegenhaltungen :
EP–A– 0 047 942
EP–A– 0 143 975
DE–A– 2 512 431
DE–A– 2 930 298
DE–A– 3 308 398
DE–A– 3 407 918
DE–A– 3 409 100
DE–A– 3 409 102
FR–A– 2 568 830
GB–A– 2 017 022

(73) Patentinhaber : **DEERE & COMPANY**
**1 John Deere Road**
**Moline Illinois 61265 (US)**

(72) Erfinder : **Gelb, Herbert, Dipl.-Ing.**
**Birkenallee 7**
**D-6832 Hockenheim (DE)**
Erfinder : **Weiss, Heinz, Dipl.-Ing.**
**Volkerstrasse 24**
**D-6140 Bensheim (DE)**

(74) Vertreter : **Feldmann, Bernhard**
**DEERE & COMPANY European Office, Patent Department Steubenstrasse 36-42 Postfach 503**
**D-6800 Mannheim 1 (DE)**

EP 0 228 617 B1

## Beschreibung

Die Erfindung betrifft eine Antriebsvorrichtung für wahlweise antreibbare Räder einer Tragachse eines Kraftfahrzeuges.

Es ist eine Vielzahl von derartigen Antriebsvorrichtungen bekannt, die jeweils für sich alleine jedoch mit gewissen Nachteilen behaftet sind.

So offenbart die DE-OS 3 407 918 eine Antriebsvorrichtung eines Kraftfahrzeug-Allradantriebssystems mit einer aus- und einrückbaren Hauptkupplung in einem Hauptgetriebe für einen wahlweise zuschaltbaren Vorderradantrieb und mit in den Naben der Vorderräder jeweils vorgesehenen Zweirichtungsfreilaufüberholkupplungen. Auf diese Weise kann auf ein Differential zwischen den Antrieben beider Vorderräder verzichtet werden, so daß lediglich ein Umlenkgetriebe zum Umleiten der Antriebsdrehbewegung von dem Hauptgetriebe zu den Naben der Vorderräder erforderlich ist.

Dieser Antriebsvorrichtung haftet jedoch der Nachteil an, daß bedingt durch die Zweirichtungsfreilaufüberholkupplungen die Vorderräder nicht zum Bremsen des Kraftfahrzeuges über eine Antriebsverbindung mit ebenfalls vorhandenen und abbremsbaren Hinterrädern herangezogen werden können. Zu Bremszwecken müßten an den Vorderrädern selbst Bremselemente vorgesehen werden.

Eine weitere Antriebsvorrichtung ist in der DE-OS 3 308 398 beschrieben und ist als ein Ausgleichsgetriebe ausgebildet, das auf den einen inneren Enden zweier als Halbwellen ausgebildeter Eingangswellen angeordnet ist und stets sowohl eine unterschiedliche Abrollgeschwindigkeit der über die Eingangswellen angetriebenen Räder erlaubt als auch immer dann für einen Antrieb der ihm zugeordneten Räder sorgt, wenn das Ausgleichsgetriebe eine höhere Winkelgeschwindigkeit aufweist als die sich in es erstreckenden Eingangswellen. Hierzu werden Druckringe verwendet, die axial ausgerichtete Schrägverzahnungen aufweisen, die mit entsprechend ausgebildeten, ebenfalls axial beweglichen, schrägverzahnten Druckringen kämmen und über eine Konusoder eine Lamellenkupplung im Falle einer unterschiedlichen Winkelgeschwindigkeit eine Verbindung zwischen der oder den Eingangswelle(n) und dem Ausgleichsgetriebe herstellen. Sobald ein Rad und somit eine Eingangswelle mit einer höheren Drehzahl umläuft als das Ausgleichsgetriebe, wird die kraftschlüssige Verbindung an der Konus- oder der Lamellenkupplung unterbrochen, und das betreffende Rad kann frei umlaufen.

Der Nachteil dieser Antriebsvorrichtung ist darin zu sehen, daß das Ausgleichsgetriebe relativ raumaufwendig ist und somit beim Einbau in eine beispielsweise die antreibbaren Vorderräder eines Kraftfahrzeuges tragende Tragachse zu einer Verringerung der Bodenfreiheit führt, die unerwünscht ist, und daß durch das erforderliche große Gehäuse entsprechend hohe Herstellungskosten anfallen.

Bei einer aus der EP-A2 0 047 942 bekannten Antriebsvorrichtung ist ein ein Ausgleichsgetriebe aufnehmendes Gehäuse an einer Brücke einer spurverstellbaren Tragachse für Vorderräder oder an einem die Brücke pendelnd aufnehmenden Tragbock befestigt. Der Antrieb der Vorderräder erfolgt dabei in einem ersten Ausführungsbeispiel über sich zwischen dem Gehäuse und dem darin befindlichen Ausgleichsgetriebe bis zum Radzentrum über ein Wellengelenk erstreckende Eingangswellen. In einem anderen in diesem Dokument angegebenen Ausführungsbeispiel einer Antriebsvorrichtung ist die Tragachse als Portalachse ausgebildet, wobei in dem Antriebsstrang zu den Vorderrädern zwei Kegelgetriebe vorgesehen sind, die eine Anpassung der Antriebsteile an das Profil der Portalachse ermöglichen.

Diese Antriebsvorrichtung ist insofern nachteilig, als bei deren ersten Ausführungsbeispiel das Gehäuse und die sich von ihm aus erstreckenden Eingangswellen zu sehr die Bodenfreiheit des Kraftfahrzeuges einschränken und sie im zweiten Ausführungsbeispiel, bedingt durch die beiden Kegelgetriebe, zu aufwendig ist. Ferner sind die darin genannten Vorderräder über ein herkömmliches Ausgleichsgetriebe miteinander verbunden, das den Nachteil bietet, daß es bei Kurvenfahrt zu Reifenverschleiß oder Bodenabscherung führt und beim Befahren von Böden unterschiedlicher Beschaffenheit keine Antriebskraft auf das noch haftende Vorderrad übertragen kann.

Schließlich ist aus der DE-OS 2 930 298 eine Antriebsvorrichtung mit einer Eingangswelle und mit einem mit dieser verbundenen Eingangsrad bekannt geworden, die dem Antrieb zweier Vorderräder dient. Die Eingangswelle erstreckt sich bei dieser Antriebsvorrichtung durch einen starren Achskörper, der in der Spurweite nicht veränderlich ist. Diese Antriebsvorrichtung kann nicht bei Tragachsen mit verschiedenen Spurweiten verwendet werden. Vielmehr müssen die Vorderräder mit Umschlag- oder Verstellfelgen versehen sein, wenn verschiedene Spurweiten eingestellt werden sollen, wobei die geschilderten Vorteile der Unterbringung der Schwenkgehäuse innerhalb der Radschüssel verlorengehen. Das Eingangsrad überträgt seine Drehbewegung direkt über ein Stirnradgetriebe auf eine das jeweilige Vorderrad haltende Radnabe.

Dieser Antriebsvorrichtung haftet weiter der Nachteil an, daß sie ein Ausgleichsgetriebe benötigt, das für einen Drehgeschwindigkeitsausgleich zwischen den beiden Vorderrädern bei Kurvenfahrt sorgt, das aber wiederum zu einer Verminderung der Bodenfreiheit führt. Ferner enthält es keine Möglichkeit, an verschiedene Spurweiten angepaßt zu werden.

Die der Erfindung zugrunde liegende Aufgabe wird darin gesehen, eine Antriebsvorrichtung für wahlweise antreibbare Räder einer Tragachse eines Kraftfahrzeuges derart zu schaffen, daß mit ihr optimale Zugkraftverhältnisse erreichbar sind, ohne daß sie die Bodenfreiheit des Kraftfahrzeuges evtl. auch bei unterschiedlichen Spurweiten einschränkt.

Die Lösung dieser Aufgabe ist im Anspruch 1 angegeben und weist folgende Merkmale auf :

a) die Tragachse ist als spurverstellbare Tragachse ausgebildet ;

b) jedes Rad ist über eine eigene drehmomentabhängig zu- und abschaltende Kupplung antreibbar ;

c) der Antrieb der Räder erfolgt innerhalb von Schwenkgehäusen über ein Stirnradgetriebe und mit obenliegender Eingangswelle ;

d) die jeweiligen Kupplungen befinden sich in dem jeweils zugehörigen Schwenkgehäuse ;

e) die Eingangswellen sind teleskopartig ausgebildet.

Für die erfindungsgemäße Lösung ist kein die Bodenfreiheit des Kraftfahrzeuges einschränkendes Gehäuse zur Aufnahme eines Ausgleichsgetriebes erforderlich, und da die anstelle des Ausgleichsgetriebes verwendeten Kupplungen in den Schwenkgehäusen untergebracht sind und die verwendeten Stirnradgetriebe eine relativ geringe axiale Erstreckung aufweisen, bleibt die Bodenfreiheit auch beim Verstellen der Spurweite mittels der spurverstellbaren Tragachse erhalten.

Durch den Einbau von Kupplungen, die mit der Eingangswelle verbunden sind, und zwar im Bereich des Schwenkgehäuses, bleibt der dafür vorzusehende Raum stets innerhalb der axialen Erstreckung des Rades gelegen, wenn die spurverstellbare Tragachse auf eine andere Spurweite eingestellt wird.

Wenn die Tragachse eine mit einem Gehäuse zum Umlenken des Antriebes verbundene Brücke und Halbachsen aufweist, die einenends zur schwenkbeweglichen Aufnahme des Schwenkgehäuses und anderenends zur Befestigung an der Brücke in einer Vielzahl quer zur Fahrtrichtung des Kraftfahrzeuges einen Abstand aufweisender Stellungen ausgebildet sind, und dabei die Halbachsen und/oder die Brücke eine Ausnehmung zur Aufnahme der Eingangswellen aufweisen, ist dadurch eine hervorragende Möglichkeit geschaffen, die Eingangswellen gegen äußere Krafteinwirkung, herrührend aus dem Anstoßen an ein Hindernis, zu schützen.

Bei einer Antriebsvorrichtung, über deren Eingangswellen schwenkgehäuseseitig vorgesehene Eingangsräder angetrieben werden, die jeweils über zwei Zwischenräder oder direkt auf ein mit dem jeweiligen Rad verbundenes Abtriebsrad eine Drehbewegung einleiten, wird eine Kupplung raumsparend und sehr funktionssicher untergebracht, wenn erfindungsgemäß ein antriebsseitiger Teil der Kupplung mit der Eingangswelle und ein abtriebsseitiger Teil der Kupplung mit dem Eingangsrad verbunden ist.

Dabei sorgt nach einer weiteren Fortentwicklung der Erfindung, insbesondere eine Ausbildung der Kupplung derart, daß der abtriebsseitige Teil mit Innen- und Außenlamellen und mit einem axial beweglichen, schrägverzahnten Druckring versehen ist, daß die Innenlamellen mit der Eingangswelle und die Außenlamellen mit dem Eingangsrad verbunden sind und daß der antriebsseitige Teil ebenfalls einen schrägverzahnten Druckring enthält, der infolge einer tangentialen Relativbewegung gegenüber dem Druckring des abtriebsseitigen Teiles eine Axialbewegung des Druckringes des abtriebsseitigen Teiles bewirkt, dafür, daß eine drehmomentabhängige Zu- oder Abschaltung des Antriebs stattfindet.

Die weiteren in den Unteransprüchen genannten Merkmale stellen zusätzliche Fortentwicklungen der Erfindung dar.

In der Zeichnung ist ein nachfolgend näher beschriebenes Ausführungsbeispiel der Erfindung dargestellt. Es zeigt :

Fig. 1 eine Vorderansicht einer mit der erfindungsgemäßen Antriebsvorrichtung ausgestatteten Tragachse,

Fig. 2 einen Vertikalschnitt durch die Tragachse entlang der Schnittlinie 2-2 und in Blickrichtung der dazugehörigen Pfeile in Fig. 1,

Fig. 3 eine Vorderansicht eines gelenkig an der Tragachse aufgehängten Schwenkgehäuses,

Fig. 4 einen Vertikalschnitt durch das Schwenkgehäuse entlang der Linie 4-4 und in Blickrichtung der dazugehörigen Pfeile in Fig. 3 und

Fig. 5 einen Ausschnitt aus Fig. 4 in vergrößerter Darstellung.

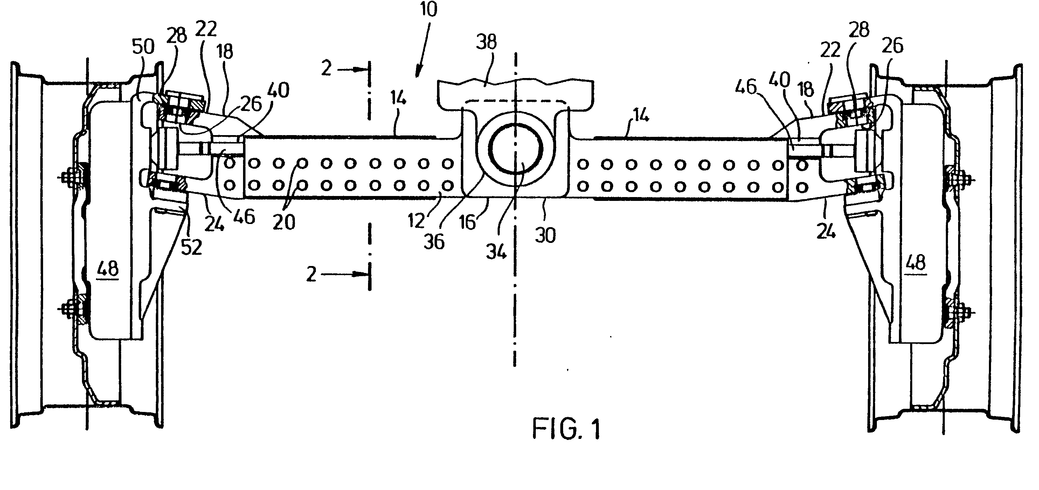

Eine in Fig. 1 gezeigte spurverstellbare Tragachse 10 enthält eine Brücke 12 und seitlich daran angeschlossen jeweils eine Halbachse 14. Fig. 1 stellt die Tragachse 10 so dar, wie sie zu sehen ist, wenn man von vorne auf ein die Tragachse 10 aufnehmendes, nicht dargestelltes Kraftfahrzeug, insbesondere auf einen Ackerschlepper, schaut. In dieser Blickrichtung liegt die Brücke 12 vor den Halbachsen 14. Selbstverständlich muß diese Tragachse 10 nicht unbedingt an der Vorderseite eines Kraftfahrzeuges angebaut sein, sondern sie kann vielmehr auch an dessen Rückseite verwendet werden und dann für rückwärtige Räder vorgesehen sein. Die Tragachse 10 kann ferner als Zusatzachse zu einer ganz anders ausgebildeten Achse oder als Zusatzachse für eine weitere identische Tragachse vorgesehen sein. Außerdem sind an der Tragachse 10 ein Gehäuse 16 zur Aufnahme eines nicht gezeigten Umlenkgetriebes in der Form eines Kegelradgetriebes und an den Halbachsen 14 Gabelgehäuse 18 vorgesehen.

Sowohl die Brücke 12 wie auch die Halbachsen 14 weisen eine Reihe im Lochbild gleicher und in zwei waagrecht oder annähernd waagrecht verlaufenden Reihen angeordneter Bohrungen 20 auf, durch welche sich der Einfachheit halber nicht in die Zeichnung aufgenommene Schrauben erstrecken können. Die Brücke 12 und die Halbachsen 14 können in einer Vielzahl von Stellungen, in denen sich entsprechende Bohrungen 20 gegenüberliegen und Schrauben in sich aufnehmen können, miteinander in Deckung gebracht werden, so daß die Tragachse 10 unterschiedliche Breiten und somit unterschiedliche Spurweiten einnehmen kann.

3

Die Brücke 12 ist mit Blick auf Fig. 1 spiegelbildlich ausgebildet und nimmt in ihrer Mitte das Gehäuse 16 auf. Vorzugsweise ist das Gehäuse 16 aus einem Guß mit der Brücke 12 hergestellt, so daß sich schließlich von dem Gehäuse 16 quer zur Fahrtrichtung des mit der Tragachse 10 ausgestatteten Kraftfahrzeuges die Brücke 12 bildende Arme erstrekken. Das Gehäuse 16 schließt an seiner Unterseite mit der Brücke 12 ab.

Die Halbachsen 14 sind an ihrem der Brücke 12 abgelegenen, also ihrem äußeren Ende einstückig mit jeweils einem Gabelgehäuse 18 ausgebildet. Jedes Gabelgehäuse 18 weist dabei eine geringe Neigung zur Längsachse der Halbachsen 14 und zu der Horizontalen in der Bildebene auf und besteht im wesentlichen aus einem oberen und einem unteren Arm 22, 24, in denen jeweils eine Öffnung 26 zur Aufnahme eines Lagers 28 vorgesehen ist. Das Gabelgehäuse 18 kann ferner mit Richtung quer zur Bildebene eine Neigung zu der Vertikalen einnehmen. Generell aber sind die Gabelgehäuse 18 herkömmlich ausgebildet.

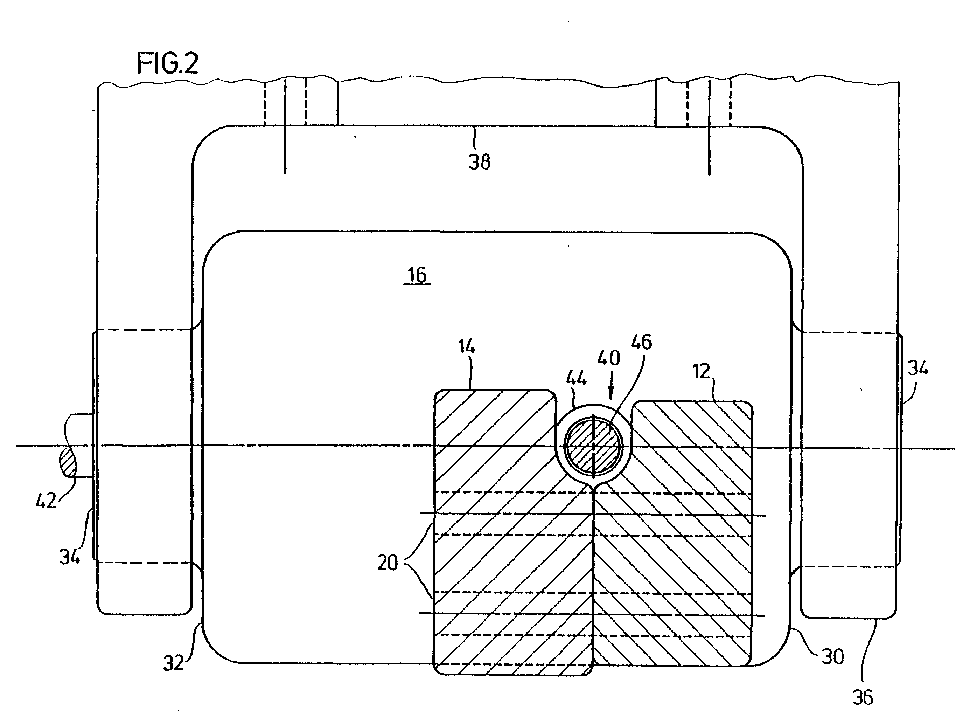

Das Gehäuse 16 weist an seiner vorderen und an seiner nur in Fig. 2 erkennbaren rückwärtigen Stirnfläche 30 und 32 jeweils einen angegossenen oder angeschraubten Lagerzapfen 34 auf, auf die jeweils ein Lagerauge 36 eines Vorderachsbockes 38, der nur bruchstückhaft gezeigt ist, aufgeschoben wird und der somit die Tragachse 10 insgesamt quer zur Fahrtrichtung pendelnd aufnimmt.

Wie insbesondere aus Fig. 2 hervorgeht, stellt der Querschnitt der Brücke 12 nahezu ein Rechteck dar, das sich seitlich von dem Gehäuse 16 forterstreckt, und die Halbachsen 14, die spiegelbildlich zueinander ausgebildet sind und von denen in Fig. 2 nur die in Fahrtrichtung rechte zu erkennen ist, weisen ebenfalls ungefähr die Form eines Rechteckes auf. Es ergibt sich, daß die Halbachsen 14 in ihrem oben gelegenen Endbereich zu der Brücke 12 einen Abstand einnehmen, der eine sich quer zur Fahrtrichtung erstreckende Ausnehmung 40 bildet. In ihrem unteren Endbereich, der auch die beiden Reihen Bohrungen 20 enthält, liegen die Halbachsen 14 an der Brücke 12 flach an. Diese Ausnehmung 40 kann, wie dies jedoch bei diesem Ausführungsbeispiel der Erfindung nicht gezeigt ist, von oben her durch eine Platte oder einen Deckel verschlossen werden, so daß gegebenenfalls anfallender Schmutz nicht in die Ausnehmung 40 fallen und sich dort ansammeln kann.

Man erkennt ferner, daß sich durch den rückwärtigen und in Fig. 2 links gelegenen Lagerzapfen 34 eine Antriebswelle 42 erstreckt, die der Drehkrafteinleitung in das sich in dem Gehäuse 16 befindliche Umlenkgetriebe dient. Die Antriebswelle 42 steht über eine Vorderradantriebskupplung mit einem Getriebe und einem Motor des Kraftfahrzeuges in Antriebsverbindung, wie dies jedoch nicht dargestellt ist. Schließlich ist auch eine seitlich aus dem Gehäuse 16 durch eine Lagerstelle 44 austretende teleskopartige Eingangswelle 46 im Schnitt zu sehen, die sich in der Ausnehmung 40 bis in das Gabelgehäuse 18 erstreckt und der über das Umlenkgetriebe eine Drehkraft aufgegeben wird.

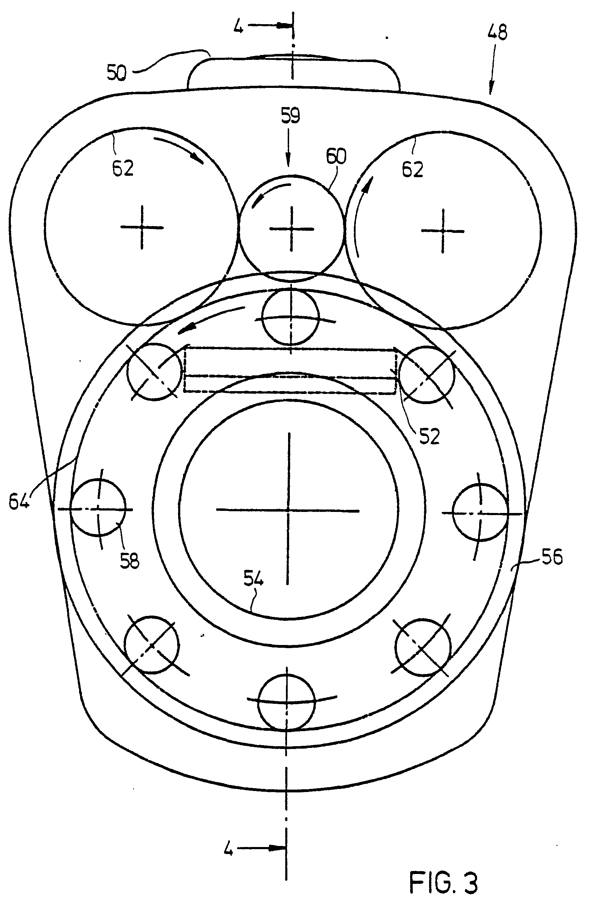

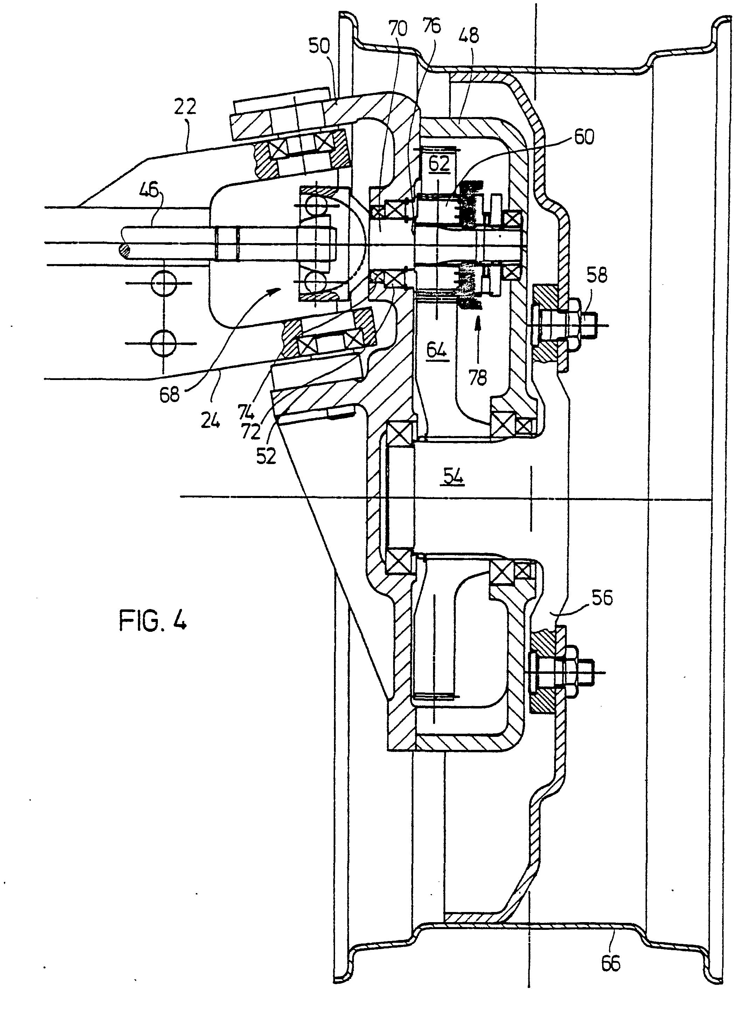

Mit Blick auf die Figuren 1 und 3 sieht man ein Schwenkgehäuse 48, das verallgemeinert die Form eines auf dem Kopf stehenden Trapezes aufweist. An dem Schwenkgehäuse 48 angebracht und gegebenenfalls einstückig mit diesem ausgebildet befinden sich ein oberer und ein unterer, jedoch z. T. nur unsichtbar gezeichneter Gabelarm 50, 52, die schwenkbeweglich mit dem oberen und dem unteren Arm 22 und 24 des Gabelgehäuses 18 verbunden sind, wie dies insbesondere aus Fig. 4 hervorgeht. Der obere und der untere Gabelarm 50 und 52 erstrecken sich in die Zeichenebene hinein. In Blickrichtung vor dem Schwenkgehäuse 48 gelegen befindet sich eine Radwelle 54 mit einem Flansch 56, an den eine Felge 66 eines in der Zeichnung nicht aufgenommenen Reifens, insbesondere eines Vorderradreifens, mittels Radbolzen 58 befestigt wird.

Mit unterbrochenen Linien ist schließlich ein Stirnradgetriebe 59, bestehend aus einem Eingangsrad 60, zwei Zwischenrädern 62 und einem Abtriebsrad 64, dargestellt, welches sich im Schwenkgehäuse 48 befindet, wobei sich das Eingangsrad 60 vorzugsweise schwimmend in das Schwenkgehäuse 48 und mit den beiden Zwischenrädern 62 frei kämmend erstreckt, um diese anzutreiben. Die beiden Zwischenräder 62 kämmen mit dem Abtriebsrad 64, welches drehfest auf der Radwelle 54 sitzt, so daß der Antrieb, von dem Eingangsrad 60 kommend, über die Zwischenräder 62, das Abtriebsrad 64 und die Radwelle 54 auf das Rad übergeleitet werden kann. Die Zwischenräder 62 sind auf herkömmliche und nicht gezeigte Weise auf in das Schwenkgehäuse 48 eingesetzten Bolzen gelagert. Die in Fig. 3 aufgenommenen Richtungspfeile kennzeichnen die Umdrehungsrichtung der Zahnräder 60, 62, 64 in einer Fahrtrichtung. Neben der vorzugsweisen Konstruktion ergeben sich weitere Anordnungsmöglichkeiten wie zum Beispiel einer einfachen Stirnradstufe.

Fig. 4 zeigt in einem Vertikalschnitt die Unterbringung des Eingangsrades 60, der Zwischenräder 62 und des Abtriebsrades 64 in dem Schwenkgehäuse 48 sowie die bereits beschriebene Verbindung des Schwenkgehäuses 48 mit dem Gabelgehäuse 18. Ferner erkennt man daraus die Verbindung zwischen der Felge 66 und dem Flansch 56 sowie die räumliche Beziehung des Schwenkgehäuses 48 zu dem Felgeninnenraum. Es geht außerdem aus Fig. 4 hervor, wie die Radwelle 54 angeordnet und gelagert ist, ohne daß dies gesondert beschrieben werden müßte.

Die Eingangswelle 46 greift an ihrem in dem Gabelgehäuse 18 liegenden Endbereich an einem homokinetischen Gelenk 68 einerseits an, während sich andererseits das homokinetische Gelenk 68 über eine Eintriebswelle 70 in das Schwenkgehäuse 48 durch ein Lager 72 und eine Dichtung 74 hinein erstreckt, um das Eingangsrad 60 freidrehend aufzunehmen. Die Eintriebswelle 70 ist auf einem Teilbereich ihres Außenumfanges gezahnt, jedoch nicht im Bereich für das Eingangsrad 60. Es ist deutlich zu sehen, daß sich die Eingangswelle 46, das homokinetische Gelenk 68 und die Eintriebswelle 70 weit oberhalb des Mittelpunktes der Radwelle 54 und somit auch des Rades in das Schwenkgehäuse 48 erstrecken. Da zudem die Eingangswelle 46 in der Ausnehmung 40 vorgesehen ist, ergibt sich somit eine relativ hoch anordenbare Tragachse 10 mit einer großen Bodenfreiheit. Es ist denkbar, anstatt des homokinetischen Gelenkes 68 auch ein Doppelkardangelenk zu verwenden, das die gleiche Schwenkbewegung des Schwenkgehäuses 48 gegenüber dem Gabelgehäuse 18 in der Horizontalen zuläßt.

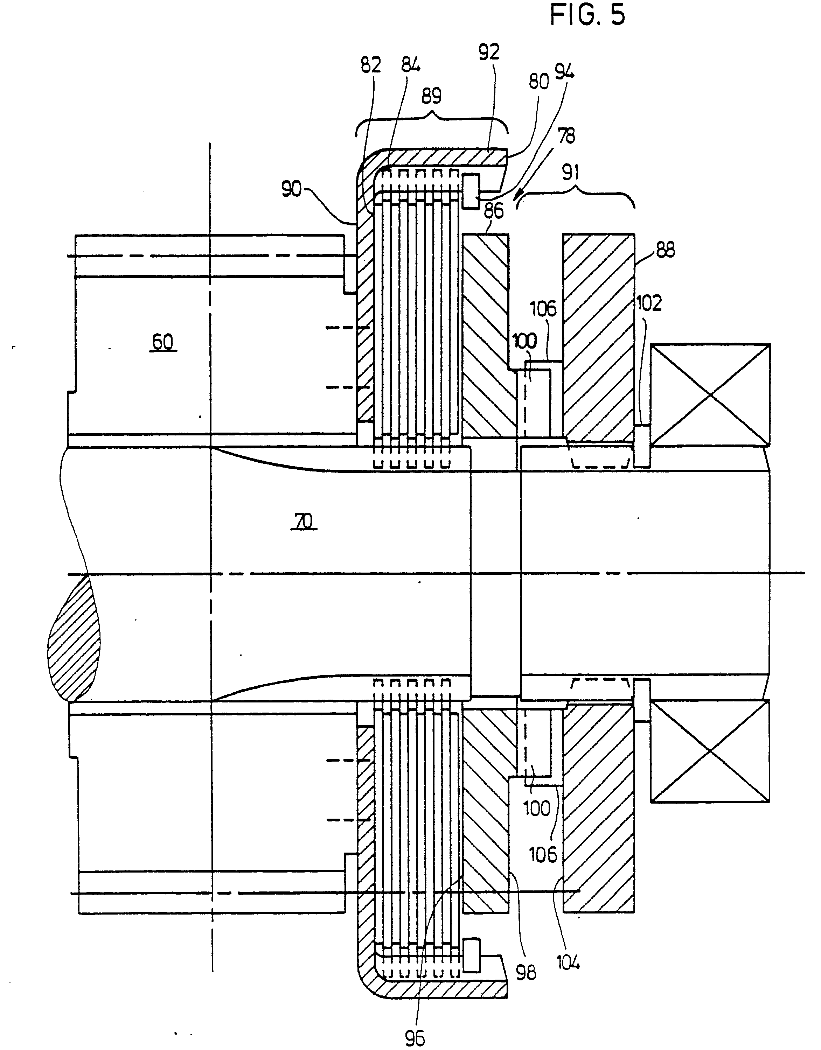

Für die folgenden Ausführungen wird zusätzlich auf Fig. 5 verwiesen. Die Eintriebswelle 70 ist im Bereich ihres sich mit dem Eingangsrad 60 deckenden Umfanges glatt ausgebildet und weist einen geringen und eine Gleitbewegung zulassenden Ringspalt zu dem Innenumfang des Eingangsrades 60 auf. Dieser Ringspalt und die schwimmende Lagerung des Eingangsrades 60 ermöglichen eine exakte Belastungsaufteilung des Eingangsrades beim Antrieb. Sie weist ferner eine Schulter 76 auf, an der sich das Eingangsrad 60 bei einer Gleitbewegung in Richtung auf das homokinetische Gelenk 68 zu axial abstützt. Die Eintriebswelle 70 selbst ist mittels nicht näher bezeichneter Sicherungsringe in herkömmlicher Weise gegenüber dem Schwenkgehäuse 48 axial festgelegt.

Auf der Eintriebswelle 70 ist eine drehmomentabhängig zu- oder abschaltende Kupplung 78 in der Art einer Lamellenkupplung vorgesehen. Diese Kupplung 78, die auf den Eintriebswellen 70 beider Räder vorgesehen ist, besteht aus einem abtriebsseitigen und einem antriebsseitigen Teil 89 und 91 und enthält als wesentliche Bestandteile einen Lamellenträger 80, Innenlamellen 82, Außenlamellen 84, einen abtriebsseitigen Druckring 86 und einen antriebsseitigen Druckring 88, wobei die Innen- und die Außenlamellen 82 und 84 ein Lamellenpaket 82, 84 bilden.

Der Lamellenträger 80 ist topfförmig mit einem Boden 90 und einem Rand 92 ausgebildet, wobei der Boden 90 eine konzentrische Öffnung aufweist, auf die in der Zeichnung nicht Bezug genommen ist und die der Aufnahme der Eintriebswelle 70 dient.

Der Boden 90 ist radial und axial unbeweglich mit dem Eingangsrad 60 verbunden, was mittels einer Schraub- oder Lötverbindung bewirkt werden kann.

Der Rand 92 weist an seinem Innenumfang eine Verzahnung auf, die der drehfesten Aufnahme der Außenlamellen 84 dient und die zu dem äußeren Ende des Randes 92 hin von einer Nut zur Aufnahme eines Sicherungsringes 94 unterbrochen ist.

Die Innenlamellen 82 weisen ebenfalls in ihrem Mittenbereich eine Öffnung auf, die jedoch an ihrem Rand verzahnt ist, so daß die Innenlamellen 82 eine drehfeste Verbindung mit der auf dem Außenumfang der Eintriebswelle 70 vorgesehenen Verzahnung eingehen können. Wie dies bekannt ist, wechseln sich jeweils eine Außenlamelle 84 und eine Innenlamelle 82 in dem Lamellenträger 80 ab, so daß eine drehfeste Verbindung zwischen der Eintriebswelle 70 und dem Eingangsrad 60 entsteht, wenn die Innen- und die Außenlamellen 82 und 84 fest aufeinander gepreßt werden. Gegebenenfalls kann die äußerste Lamelle durch eine Druck- oder Stützplatte ersetzt werden, oder es kann eine derartige Druck- oder Stützplatte zwischen den Sicherungsring 94 und die äußerste Lamelle eingefügt werden, so daß ein gleichmäßiger Anpreßdruck auf das gesamte Lamellenpaket 82, 84 aufgebracht werden kann.

Der abtriebsseitige Druckring 86 ist sowohl axial wie auch tangential, d. h. in Drehrichtung, zur Eintriebswelle 70 beweglich und diese konzentrisch umgebend gelagert und weist mit Blick auf Fig. 4 eine linke und eine rechte Stirnseite 96 und 98 auf. Die linke Stirnseite 96 ist eben und liegt stets an der äußersten Innen- oder Außenlamelle 82, 84 oder der vorerwähnten Druck- oder Stützplatte an. Die rechte Stirnseite 98 weist sich in axialer Richtung keilförmig erstreckende Zähne 100 auf.

Der antriebsseitige Druckring 88 weist eine konzentrisch in ihm vorgesehene Öffnung auf, die in ihrem Randbereich gezahnt ist, so daß sie mit der Verzahnung auf dem Außenumfang der Eintriebswelle 70 einen Formschluß eingeht. Auf dem Außenumfang der Eintriebswelle 70, und zwar rechts des antriebsseitigen Druckringes 88 mit Blick auf die Figuren 4 und 5, ist ein Sicherungsring 102 eingebracht. Der antriebsseitige Druckring 88 ist also gegenüber der Eintriebswelle 70 tangential, d. h. in Drehrichtung, und nach rechts axial unbeweglich angeordnet. Eine linke Stirnseite 104 des antriebsseitigen Druckringes 88 weist ebenfalls sich in axialer Richtung keilförmig erstreckende Zähne 106 auf.

Die Zähne 100 des abtriebsseitigen Druckringes 86 und die Zähne 106 des antriebsseitigen Druckringes 88 sind einander entsprechend ausgebildet und weisen zwischen sich jeweils und sich ebenfalls entsprechend, jedoch aus der Zeichnung nicht ersichtliche Zahnlücken auf. Der abtriebsseitige und der antriebsseitige Druckring 86 und 88 sind derart eingebaut, daß sie stets eine gewisse Vorspannung auf das Lamellenpaket 82, 84 ausüben, die jedoch derart bemessen ist, daß sich die Außen- oder die Innenlamellen 84 oder 82 in einem nicht belasteten Zustand noch gegeneinander bewegen können.

In dem Falle, daß sich der abtriebsseitige Druckring 86 tangential gegenüber dem antriebsseitigen Druckring 88 bewegt, also zwischen beiden eine Relativbewegung in Drehrichtung stattfindet, findet aufgrund der sich in axialer Richtung keilförmig erstreckenden Zähne 100, 106, die sich an sich gegenüberliegenden Flanken berühren, eine Axialbewegung des abtriebsseitigen Druckringes 86 gegenüber dem antriebsseitigen Druckring 88 statt. Da der antriebsseitige Druckring 88 nach rechts von dem Sicherungsring 102 gehalten wird, bleibt nur eine nach links gerichtete Bewegung des abtriebsseitigen Druckringes 86 auf das Lamellenpaket 82, 84, die in einer Erhöhung des Anpreßdruckes auf die Innen- und die Außenlamellen 82 und 84 mit der vorbeschriebenen Konsequenz resultiert.

Für die folgende Funktionsbeschreibung wird davon ausgegangen, daß die Antriebswelle 42 von dem Hauptgetriebe aus angetrieben wird, und zwar mit einer Drehzahl, die einen 0 % Vorlauf der mit der Tragachse 10 verbundenen Räder gegenüber den restlichen Rädern ergibt. Die über die Antriebswelle 42 eingeleitete Drehbewegung wird in dem Gehäuse 16 mittels des Umlenkgetriebes auf die beiden Eingangswellen 46 umgeleitet, die drehfest miteinander verbunden sind und somit gemeinsam umlaufen. Die Eingangswellen 46 übertragen die ihnen aufgegebene Drehbewegung über die Eintriebswellen 70, die Kupplungen 78, die Eingangsräder 60, die Zwischenräder 62 und die Abtriebsräder 64 auf die Radwellen 54 und somit auf die Räder.

Ausgehend von einer Geradeausfahrt und einem Schlupf der von dem Hauptgetriebe direkt angetriebenen restlichen Räder von 0 % werden die Kupplungen 78 keine Antriebsverbindung zwischen den Eintriebswellen 70 und den Eingangsrädern 60 herstellen, da zwischen dem abtriebsseitigen und dem antriebsseitigen Druckring 86 und 88 keine tangentiale Relativbewegung stattfindet. Das heißt, daß der abtriebsseitige Druckring 86 nicht auf das Lamellenpaket 82, 84 zu bewegt wird und somit auch keinen Kraftschluß zwischen den Außen- und den Innenlamellen 84 und 82 erzeugt.

Wiederum ausgehend von einer Geradeausfahrt, allerdings nun mit einem Schlupf an den restlichen, also den angetriebenen Rädern von beliebiger Höhe, stellt sich folgende Funktion dar. Die antriebsseitigen Druckringe 88 drehen kurzzeitig schneller als die abtriebsseitigen Druckringe 86, und die resultierende Differenzgeschwindigkeit führt dazu, daß sich die einander gegenüberliegenden Flanken benachbarter Zähne 100 und 106 aufeinander zu bewegen und in Zahnkontakt treten. Sobald sie aneinander zur Anlage gekommen sind, werden die Tangentialkräfte entsprechend der Neigung der Flanken der Zähne 100, 106 in Axial- und Radialkomponenten zerlegt, wobei die Axialkomponenten eine Axialbewegung des abtriebsseitigen Druckringes 86 in Richtung auf das Lamellenpaket 82, 84 bewirken. Dadurch erhöht sich der Anpreßdruck auf die Innen- und die Außenlamellen 82 und 84, so daß eine drehfeste Verbindung zwischen der Eintriebswelle 70 und dem Eingangsrad 60 entsteht und die Antriebslinie ausgehend von der Antriebswelle 42 bis zu den Radwellen 54 geschlossen ist ; die Räder entwickeln also Zugkraft.

Des weiteren wird ausgegangen von einer Kurvenfahrt in einer Linkskurve. In einer derartigen Situation rollt das rechte Rad schneller ab als das linke, so daß das dem rechten Rad zugeordnete Eingangsrad 60 mit dem ihm zugeordneten abtriebsseitigen Druckring 86 dem antriebsseitigen und mit der Eintriebswelle 70 verbundenen Druckring 88 voreilt. Dies bedeutet, daß sich die entsprechenden Flanken wieder voneinander trennen, sofern zuvor Schlupf an den restlichen Rädern vorhanden war, wodurch sich der abtriebsseitige Druckring 86 wieder von dem Lamellenpaket 82, 84 löst und den Kraftschluß aufhebt. Daher kann das rechte Rad überholen, ohne eine Kraft auf die Eintriebswelle 70 zu übertragen. Das linke Rad, also das kurveninnere, läuft dagegen mit der Antriebsgeschwindigkeit um, so daß an ihm eine Antriebsverbindung, wie sie für die Geradeausfahrt beschrieben worden ist, beibehalten wird. Diese Antriebsverbindung sorgt dafür, daß das kurveninnere Rad Zugkraft zur Kurvenfahrt des Kraftfahrzeuges beiträgt.

Das Vorbeschriebene gilt für eine Kurvenfahrt in einer Rechtskurve analog.

Schließlich wird der Zustand des Bremsens beschrieben, bei dem die Räder zu einem Voreilen der abtriebsseitigen Druckringe 86 gegenüber den antriebsseitigen Druckringen 88 führen, was zunächst ein Aufheben des Kraftschlusses in dem Lamellenpaket 82, 84 nach sich zieht. Mit zunehmendem Voreilungsgrad werden jedoch die den bisherigen Flanken der Zähne 100, 106 gegenüberliegenden Flanken aneinander zur Anlage kommen und somit eine Antriebsverbindung, wenn auch in der entgegengesetzten Richtung, herstellen, die bewirkt, daß das Kraftfahrzeug durch den Motor über eine im Antriebsstrang liegende Vorderradbremse oder bei geschlossener Vorderradantriebskupplung über die Hinterräder abgebremst werden kann.

Alle vorgenannten Situationsbeschreibungen gelten für eine Rückwärtsfahrt analog, und zwar unabhängig davon, ob es sich dabei um eine Geradeausfahrt oder um eine Kurvenfahrt handelt, da die Druckringe 86 und 88 symmetrisch aufgebaut sind.

Es ist ersichtlich, daß zu einer Spurverstellung der Tragachse 10 und der mit ihr verbundenen Räder lediglich die Halbachsen 14 von der Brücke 12 gelöst und dieser gegenüber in eine andere, nämlich in die gewünschte Stellung gebracht und dort befestigt werden können. Dies ist insbesondere deshalb leicht möglich, weil die Eingangswellen 46 und 42 teleskopartig ausgebildet sind. In der neuen Spurweite, wie in jeder Spurweite überhaupt, bleibt die Felge 66 unverändert auf dem Flansch 56, und die räumliche Beziehung des Schwenkgehäuses 48 derart, daß es stets im Innenraum der Felge 66 gelegen ist, bleibt erhalten. Das bedeutet, daß mit der Spurweitenverstellung keine Beeinträchtigung der Bodenfreiheit einhergeht.

Im Vorstehenden sind insbesondere die Art der Lagerung des Schwenkgehäuses 48 in dem Gabelgehäuse 18 und die für die Lenkung der Räder erforderlichen Teile nicht beschrieben, da diese in herkömmlicher Weise ausgebildet sind.

**Patentansprüche**

1. Antriebsvorrichtung für wahlweise antreibbare Räder einer Tragachse eines Kraftfahrzeuges, mit folgenden Merkmalen :

a) die Tragachse (10) ist als spurverstellbare Tragachse ausgebildet ;

b) jedes Rad ist über eine eigene drehmomentabhängig zu- und abschaltende Kupplung (78) antreibbar ;

c) der Antrieb der Räder erfolgt innerhalb von Schwenkgehäusen (48) über ein Stirnradgetriebe (59) und mit obenliegender Eingangswelle (46) ;

d) die jeweiligen Kupplungen (78) befinden sich in dem jeweils zugehörigen Schwenkgehäuse (48) ;

e) die Eingangswellen (46) sind teleskopartig ausgebildet.

2. Antriebsvorrichtung nach Anspruch 1, dadurch gekennzeichnet, daß die Kupplungen (78) zwischen den Eingangswellen (46) und den Stirnradgetrieben (59) angeordnet sind.

3. Antriebsvorrichtung nach Anspruch 1, wobei die Tragachse (10) eine mit einem Gehäuse (16) zum Umlenken des Antriebs verbundene Brücke (12) und Halbachsen (14) aufweist, die einenends zur schwenkbeweglichen Aufnahme eines Schwenkgehäuses (48) und anderenends zur Befestigung an der Brücke (12) in einer Vielzahl quer zur Fahrtrichtung des Kraftfahrzeuges einen Abstand aufweisender Stellungen ausgebildet sind, und die Halbachsen (14) und/oder die Brücke (12) eine Ausnehmung (40) zur Aufnahme der Eingangswellen (46) aufweisen.

4. Antriebsvorrichtung nach Anspruch 1, wobei über die Eingangswellen (46) schwenkgehäuseseitig vorgesehene Eingangsräder (60) angetrieben werden, die jeweils über zwei Zwischenräder (62) oder direkt auf ein mit dem jeweiligen Rad verbundenes Abtriebsrad (64) eine Drehbewegung einleiten, wobei ein antriebsseitiger Teil (91) der Kupplung (78) mit der Eingangswelle (46) und ein abtriebsseitiger Teil (89) der Kupplung (78) mit dem Eingangsrad (60) verbunden ist.

5. Antriebsvorrichtung nach Anspruch 4, wobei der abtriebsseitige Teil (89) mit Innen- und Außenlamellen (82, 84) und mit einem axial beweglichen, schrägverzahnten Druckring (86) versehen ist, die Innenlamellen (82) mit der Eingangswelle (46) und die Außenlamellen (84) mit dem Eingangsrad (60) verbunden sind und der antriebsseitige Teil (91) ebenfalls einen schrägverzahnten Druckring (88) enthält, der infolge einer tangentialen Relativbewegung gegenüber dem Druckring (86) des abtriebsseitigen Teiles (89) eine Axialbewegung des Druckringes (86) des abtriebsseitigen Teiles (89) bewirkt.

6. Antriebsvorrichtung nach einem oder mehreren der vorherigen Ansprüche, gekennzeichnet durch ein homokinetisches Gelenk (68), das einerseits mit der Eingangswelle (46) und andererseits mit einer das Eingangsrad (60) tragenden Eintriebswelle (70) verbunden ist.

7. Antriebsvorrichtung nach Anspruch 7, dadurch gekennzeichnet, daß das Eingangsrad (60) mit dem abtriebsseitigen Teil (89) im unbelasteten Zustand frei drehbar bezüglich der Eintriebswelle (70) gelagert ist.

8. Antriebsvorrichtung nach Anspruch 1, dadurch gekennzeichnet, daß die Kupplungen (78) als Konuskupplungen ausgebildet sind.

9. Antriebsvorrichtung nach Anspruch 1, dadurch gekennzeichnet, daß die Kupplungen (78) wahlweise als hydraulisch beaufschlagte Lamellenkupplungen ausgebildet sind.

## Claims

1. Drive device for selectively drivable wheels of a support axle of a motor vehicle, with the following features :

a) the support axle (10) is formed as a track adjustable support axle ;

b) each wheel is drivable through an individual clutch (78) engageable and disengageable in dependence on torque ;

c) the drive of the wheels takes place within swinging housings (48) through a spur gear drive (59) and with overlying input shaft (46) ;

d) each clutch (78) is located in the corresponding swinging housing (48) ;

e) the input shafts (46) are telescopically formed.

2. Drive device according to claim 1, characterized in that the clutches (78) are arranged between the input shafts (46) and the spur gear drives (59).

3. Drive device according to claim 1, wherein the support axle (10) has a bridge (12) connected to a housing (16) for diverting the drive and half axles (14), which are formed at one end for pivotal attachment of a swinging housing (48) and at the other end for fixing to the bridge (12) in a plurality of locations spaced transverse to the direction of travel of the motor vehicle, and the half axles (14) and/or the bridges (12) have a recess (40) for receiving the input shafts (46).

4. Drive device according to claim 1, wherein input wheels (60) provided on the swinging housing side are driven by the input shafts (46), which wheels each impart a rotary movement to a drive wheel (64) connected to the respective wheel through two intermediate wheels (62) or directly, wherein a part (91) of the clutch on the driving side is connected to the input shaft (46) and a part (89) of the clutch (78) on the driven side is connected to the input wheel (60).

5. Drive device according to claim 4, wherein the driven side part (89) is provided with inner and outer plates (82, 84) and with an axially movable, bevel-toothed pressure ring (86), the inner plates (82) being connected to the input shaft (46) and the outer plates (84) to the input wheel (60) and the driving side part (91) also comprising a bevel-toothed pressure ring (88), which effects an axial movement of the pressure ring (86) of the driven side part (89) in consequence of a tangential relative movement relative to the pressure ring (86) of the driven side part (89).

6. Drive device according to one or more of the preceding claims, characterized by a homo-kinetic joint (68), which is connected on the one hand to the input shaft (46) and on the other hand to an in- drive shaft (70) carrying the input wheel (60).

7. Drive device according to claim 7, characterized in that the input wheel (60) with the driven side part (89) is mounted freely rotatable relative to the in-drive shaft (70) in the unloaded state.

8. Drive device according to claim 1, characterized in that the clutches (78) are formed as cone clutches.

9. Drive device according to claim 1, characterized in that the clutches (78) are formed selectively as hydraulically actuated plate clutches.

## Revendications

1. Dispositif d'entraînement pour des roues d'un axe de support d'un véhicule à moteur pouvant être entraînées selon les nécessités, caractérisé par les caractéristiques suivantes :

a) l'axe de support (10) est réalisé sous la forme d'un axe de support à largeur de voie variable ;

b) chaque roue peut être entraînée par l'intermédiaire d'un embrayage propre (78) pouvant être embrayé et débrayé en fonction du couple ;

c) l'entraînement des roues a lieu à l'intérieur de carters pivotants (48) par l'intermédiaire d'un engrenage droit (59) et avec un arbre d'entrée (46) en tête ;

d) les embrayages respectifs (78) se trouvent chacun dans le carter pivotant respectif correspondant (48) ;

e) les arbres d'entrée (46) sont d'une conformation télescopique.

2. Dispositif d'entraînement selon la revendication 1, caractérisé en ce que les embrayages (78) sont placés entre les arbres d'entrée (46) et les engrenages droits (59).

3. Dispositif d'entraînement selon la revendication 1, l'axe de support (10) comportant un pont (12) relié à un carter (16) pour la commutation de l'entraînement et des demi-axes (14) qui sont conformés d'une part pour recevoir de façon qu'il puisse pivoter un carter pivotant (48) et, d'autre part, pour la fixation au pont (12) dans une pluralité de positions écartées perpendiculairement à la direction de déplacement du véhicule à moteur, et les demi-axes (14) et/ou le pont (12) comportent un évidement (40) pour recevoir les arbres d'entrée (46).

4. Dispositif d'entraînement selon la revendication 1, des pignons d'entrée (60) prévus côté carters pivotants pouvant être entraînés par l'intermédiaire des arbres d'entrée (46), lesquels communiquent par l'intermédiaire de deux pignons intermédiaires respectifs (62) ou directement un mouvement de rotation à un pignon de sortie (64) relié à chaque roue respective, une partie (91) de l'embrayage (78) située côté entraînement étant reliée à l'arbre d'entrée (46) et une partie (89) de l'embrayage (78) située côté sortie étant reliée au pignon d'entrée (60).

5. Dispositif d'entraînement selon la revendication 4, la partie (89) côté sortie comportant des disques intérieurs et extérieurs (82, 84) et un anneau de poussée à denture oblique (86) mobile axialement, les disques intérieurs (82) étant reliés à l'arbre d'entrée (46) et les disques extérieurs (84) au pignon d'entrée (60) et la partie (91) côté entraînement comportant également un anneau de poussée (88) à denture oblique qui provoque, en conséquence d'un mouvement relatif tangentiel par rapport à l'anneau de poussée (86) de la partie côté sortie (89), un mouvement axial de l'anneau de poussée (86) de la partie côté sortie (89).

6. Dispositif d'entraînement selon une ou plusieurs des revendications précédentes, caractérisé par une articulation homocinétique (68) qui est reliée d'une part à l'arbre d'entrée (46) et d'autre part à un arbre d'entrée (70) portant le pignon d'entrée (60).

7. Dispositif d'entraînement selon la revendication 7, caractérisé en ce que le pignon d'entrée (60) avec la partie côté sortie (89) est monté de façon à pouvoir, à l'état déchargé, tourner librement par rapport à l'arbre d'entrée (70).

8. Dispositif d'entraînement selon la revendication 1, caractérisé en ce que les embrayages (78) sont réalisés sous la forme d'embrayages coniques.

9. Dispositif d'entraînement selon la revendication 1, caractérisé en ce que les embrayages (78) sont réalisés selon les nécessités sous la forme d'embrayages à disques hydrauliques.

FIG. 1

EP 0 228 617 B1

FIG.2

FIG. 3

FIG. 4

FIG. 5